# EUROPEAN PATENT APPLICATION

(11) **EP 3 646 971 A1**
(43) Date of publication of application: **06.05.2020**
(21) Application number: 19206971.4
(22) Date of filing: 04.11.2019
(51) Int. Cl.: B22F 3/105, B08B 7/02, B22F 3/24, B29C 64/153, B29C 64/30, B29C 64/35, B33Y 10/00, B33Y 40/00

(54) **ADAPTER FOR USE WITH POST ADDITIVE MANUFACTURING SYSTEMS**

(30) Priority: 05.11.2018 US 201816180898
(71) Applicant: Hamilton Sundstrand Corporation, Charlotte, NC 28217-4578 (US)
(72) Inventor: MADINGER, Alexander, Hartford, CT Connecticut 06106 (US); GIULIETTI, Diana, Cambridge, MA Massachusetts 02139 (US)
(74) Representative: Dehns

(57) **Abstract**

An adapter for connecting a component to a build plate holder (103) of a system for removing powder from the component including a body (152) having a primary surface (154) for contacting the build plate holder and a secondary surface (156) for contacting a mounting surface of the component. At least one connector (160) is operable to couple the component to the body.

## Description

### BACKGROUND

Embodiments of the current disclosure relate to systems for post additive manufacturing processing, and more specifically, to an adapter for use with a system for post additive manufacturing processing.

Traditionally, removing metal powder from additive manufacturing build structures can be a challenge. The build structure often needs to be tilted at various angles, and agitated mechanically or by other means to facilitate powder removal. This process is tedious and time consuming, as well as prone to numerous environmental health and safety issues. Such conventional methods and systems have generally been considered satisfactory for their intended purpose.

Existing systems for removing unwanted material from an additively manufactured part typically include a single standard size build plate. However, not all additively manufactured parts are compatible for use with the build plate. There is therefore a need for an adapter such that components of various sizes may be used with the system.

### BRIEF DESCRIPTION

According to an embodiment, an adapter for connecting a component to a build plate holder of a system for removing powder from the component including a body having a primary surface for contacting the build plate holder and a secondary surface for contacting a mounting surface of the component. At least one connector is operable to couple the component to the body.

In addition to one or more of the features described above, or as an alternative, in further embodiments at least one of a size and shape of the body is complementary to an opening of the build plate holder, the body being receivable within the opening of the build plate holder.

In addition to one or more of the features described above, or as an alternative, in further embodiments the secondary surface of the body is generally planar.

In addition to one or more of the features described above, or as an alternative, in further embodiments the secondary surface is suitable for contacting a mounting surface of at least a first component and a second component, wherein a geometry of the first component is different than a geometry of the second component.

In addition to one or more of the features described above, or as an alternative, in further embodiments the secondary surface includes a recess, a geometry of the recess being substantially identical to the mounting surface of the component.

In addition to one or more of the features described above, or as an alternative, in further embodiments the body further comprises a plurality of holes formed in the secondary surface for receiving the at least one connector.

In addition to one or more of the features described above, or as an alternative, in further embodiments the body further comprises a plurality of channels formed in the primary surface, a portion of the at least one connector being receivable within plurality of channels.

In addition to one or more of the features described above, or as an alternative, in further embodiments the body is formed via an additively manufactured process.

In addition to one or more of the features described above, or as an alternative, in further embodiments the body is formed from a plastic material.

In addition to one or more of the features described above, or as an alternative, in further embodiments the at least one connector includes a zip tie.

In addition to one or more of the features described above, or as an alternative, in further embodiments the component mounted to the secondary surface of the adapter does not include a build plate.

Also disclosed is a system for removing powder from an additively manufactured component includes a powder removal mechanism including a build plate holder having a build plate opening, at least one actuator operable to move the build plate holder relative to an axis, and an adapter having a primary surface and a secondary surface. The adapter is positionable within the build plate opening such that the primary surface is in contact with a surface of the build plate holder defining the build plate opening and the secondary surface is in contact with a mounting surface of the component. At least one connector is operable to couple the component to the adapter.

In addition to one or more of the features described above, or as an alternative, in further embodiments the adapter formed from a plastic material.

In addition to one or more of the features described above, or as an alternative, in further embodiments the adapter is suitable for use with a plurality of different additively manufactured components.

In addition to one or more of the features described above, or as an alternative, in further embodiments the secondary surface of the adapter is a planar surface.

In addition to one or more of the features described above, or as an alternative, in further embodiments the secondary surface of the adapter includes a recess, wherein a geometry of the recess is complementary to the mounting surface of the component.

In addition to one or more of the features described above, or as an alternative, in further embodiments the adapter is mounted within the build plate opening via a plurality of fasteners.

In addition to one or more of the features described above, or as an alternative, in further embodiments the fasteners includes spring clips extending from the build plate holder and movable to contact the secondary surface of the adapter.

In addition to one or more of the features described above, or as an alternative, in further embodiments the adapter further includes a plurality of arms, the plurality of arms being positionable in overlapping arrangement with a portion of the build plate holder.

In addition to one or more of the features described above, or as an alternative, in further embodiments the plurality of fasteners extend through both the plurality of arms and the portion of the build plate holder in overlapping arrangement with the plurality of arms.

### BRIEF DESCRIPTION OF THE DRAWINGS

The following descriptions should not be considered limiting in any way. With reference to the accompanying drawings, like elements are numbered alike:
FIG. 1 is a perspective view of a system for removing powder from an additively manufactured article;
FIG. 2 is a perspective view of an adapter for mounting an additively manufactured article to a build plate holder of the system of FIG. 1 according to an embodiment;
FIGS. 3A and 3B are front and rear views of an adapter for mounting an additively manufactured article according to an embodiment;
FIG. 4 is an exploded perspective view of an adapter for mounting an additively manufactured article to a build plate holder according to an embodiment;
FIG. 5 is a perspective view of an adapter for mounting an additively manufactured article to a build plate holder according to an embodiment; and
FIG. 6 is a perspective view of an adapter for mounting an additively manufactured article to a build plate holder according to an embodiment.

### DETAILED DESCRIPTION

A detailed description of one or more embodiments of the disclosed apparatus and method are presented herein by way of exemplification and not limitation with reference to the Figures.

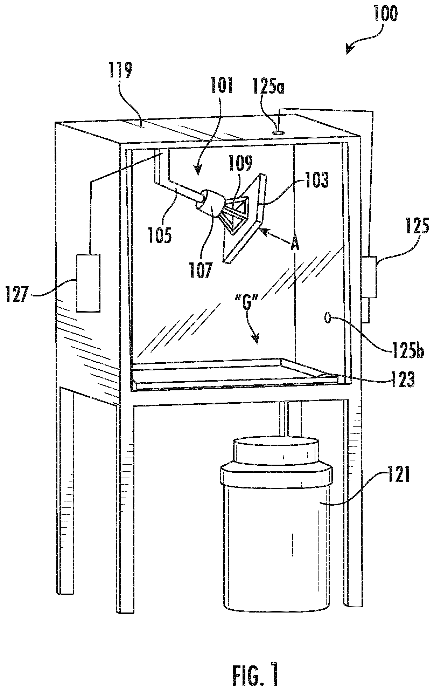

Referring now to FIG. 1, an example of a system 100 for removing powder from an additively manufactured article is illustrated. The system 100 includes a powder removal mechanism 101 having a build plate holder 103 configured to hold a build plate at a distal end thereof. The powder removal mechanism 101 may include one or more actuators. In an embodiment, a first actuator 105 is configured to angle the build plate holder 103 relative to gravity (e.g. central axis A is moved relative to gravity) and a second actuator is configured to rotate the build plate holder 103 about a central axis A of the build plate holder 103. In an embodiment, the first actuator 105 is operable to angle the build plate holder 103 between about 0 degrees and about 90 degrees relative to gravity. However, any other suitable angle or range of angles, such as between about 0 degrees and about 180 degrees relative to gravity for example, is contemplated herein.

The powder removal mechanism 101 may additionally include a vibration device 109 mounted to the build plate holder 103 to vibrate the build plate holder 103 to facilitate removal of excess powder. In an embodiment, the vibration device 109 includes an ultrasonic transducer and/or any other suitable transducer or pneumatic device.

The system 100 may further include an enclosure 119 to retain the removed powder material. However, it should be understood that the enclosure is part of system 100, but has nothing to do with removing powder. As shown in the illustrated, non-limiting embodiment, the powder removal mechanism 101 is mounted within the enclosure 119. However, powder removal mechanism 101 need not be mounted within the enclosure 119, and can instead be mounted at any suitable location, such as to a ceiling or wall in a manufacturing shop for example.

The system 100 further includes a powder recover system for recycling the removed powder. In an embodiment, the system may include a vacuum operatively connected to the enclosure to evacuate the removed powder therefrom, for example the powder collected within a catch tray 123 at a base of the enclosure 119.

An air flow system 125 may be used to route pressurized air to or toward the build plate holder 103 to facilitate powder removal. In the illustrated, non-limiting embodiment, the air flow system 125 includes an inlet 125a and an outlet 125b disposed in any suitable portion of the enclosure 119. The air flow system 125 may include any suitable pump or source of pressurized air 121, such as a gas source or vacuum for example, in communication with the enclosure 119 an operable to circulate a fluid through the inlet and outlet 125a, 125b of the enclosure.

A control system 127 coupled to the powder removal mechanism 101 is used to position and/or vibrate the build plate holder via the actuators 105, 107. For example, the control system 127 can automatically rotate and position the build plate holder 103 to one or more optimal positions at one or more predetermined speeds to facilitate powder removal based on the configured of the part from which powder is to be removed. The control system 127 may also be connected to at least one of the air flow system 125 and the vibration device 109. The control system 127 may be used to cause the air flow system 125 to provide pressurized air to the part mounted to the build plate holder 103. Similarly, the control system 127 may selectively vibrate the build plate holder 103 in a suitable manner.

The devices and systems as described above allow for an additively manufactured component and corresponding build plate to be placed on the build plate holder 103 after a part is manufactured on the build plate. The build plate holder 103 can then move to one or more positions to allow one or more of gravity, vibration, or pressurized air to coax out any powder within the manufactured part. This allows for faster post-processing as well as batch post-processing. It should be understood that the system illustrated and described here is intended as an example only, and that a system for removing unwanted material having another configuration is also within the scope of the disclosure.

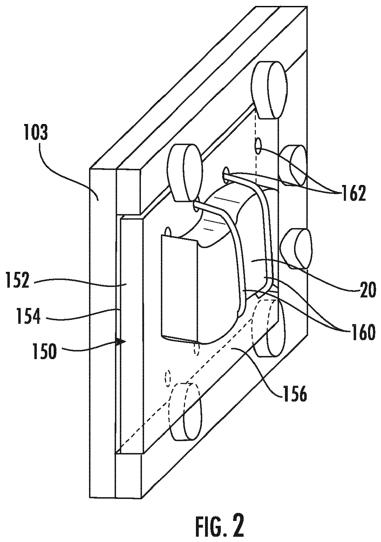

With reference now to FIGS. 2-5, an adapter 150 configured to couple a component to the build plate holder 103 of a system, such as system 100, to remove unwanted material from the component is illustrated. The adapter 150 may be intended for use with additively manufactured components formed from either a metal or plastic material that do not have a build plate compatible for use with the build plate holder 103 of the system 100. In an embodiment, a build plate is not considered compatible for use with the build plate holder 103 if the size of the build plate is smaller than or has a different shape than the corresponding opening of the build plate holder 103.

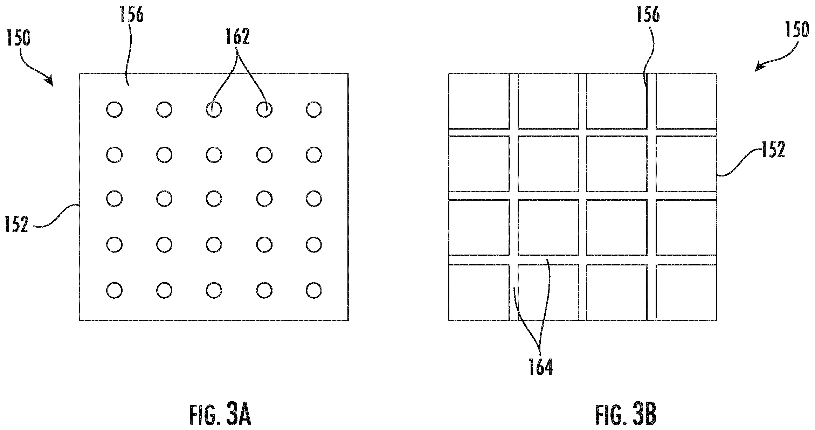

As best shown in FIGS. 2 and 3, the adapter 150 may include a body 152 having an overall size and shape complementary to the size of the build plate to be received by the build plate holder 103. In an embodiment, the size of the build plate and corresponding adapter is 10 inches (25.4 cm) square. However, a system 100 (FIG. 1) configured to receive a build plate and adapter 150 of any size within the scope of the disclosure. In the illustrated, non-limiting embodiment, the body 152 of the adapter 150 is generally rectangular in shape. However, it should be understood that an adapter 150 having any shape is within the scope of the disclosure. Further, the adapter 150 may be formed from any suitable material, including plastic and/or metal, such as via an additive manufacturing process for example.

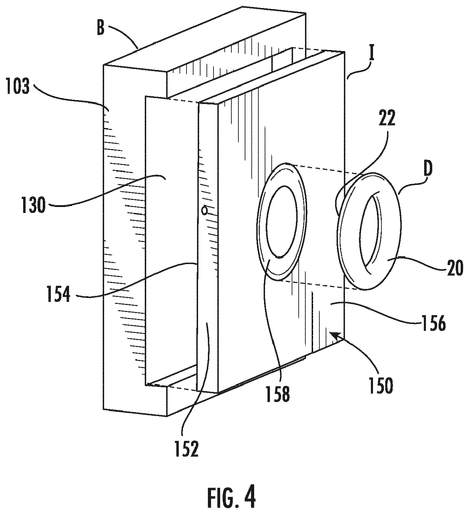

A primary surface 154 of the adapter 150 is configured to contact a surface 130 (see FIG. 4) of the build plate holder 103. Vibration generated by the vibration device 109 of the system 100 is transmitted to a component 20 mounted to the adapter 150 via this surface contact between the adapter 150 and the build plate holder 103. To maximize the surface contact, and therefore the transmission of vibration to the adapter 150, the primary surface 154 of the adapter 150 and the corresponding surface 130 of the build plate holder 103 have generally complementary contours. In the illustrated, non-limiting embodiment, both the primary surface 154 of the adapter 150 and the surface 130 of the build plate holder 103 are planar. However, other configurations are also within the scope of the disclosure.

The component 20 to be cleaned is configured to engage a secondary surface 156 of the adapter 150. The secondary surface 156 may, but need not be, disposed opposite the primary surface 154. In the illustrated, non-limiting embodiment of FIG. 2, the secondary surface 156 of the adapter 150 is a generally planar surface. In such embodiments, the adapter 150 is suitable for use with any component 20 having a similarly planar mounting surface configured to directly abut the secondary surface 156. In another embodiment, best shown in FIG. 4, the secondary surface 156 of the adapter 150 has a groove or recess 158 formed therein. The groove or recess 158 has a shape and contour that corresponds to the mounting surface 22 of the component 20 to be received therein. By matching the groove 158 with the mounting surface 22 of the component 20, the overall surface contact formed between the adapter 150 and the component 20 may be maximized. However, in such embodiments, the adapter 150 is typically custom built for and is limited to use with a specific component 20. It should be understood that in some embodiments, the component 20 to be mounted to the adapter 150 includes not only an additively manufactured part, but also a build plate (not shown) associated with that part.

Regardless of whether the adapter 150 is a universal adapter (FIG. 2) having a planar secondary surface 156 suitable for use with a plurality of components, or a custom built adapter 150 suitable for use with a single component, the component 20 is affixable to the adapter 150 such that the mounting surface 22 of the component 20 is arranged in contact, such as direct contact for example, with the secondary surface 156. Any suitable mechanism for removably connecting a component 20 to the adapter 150 is contemplated herein. In the illustrated, non-limiting embodiment of FIG. 2, one or more connectors 160, such as zip ties for example, are used to couple a component 20 to the adapter 150. As shown in FIG. 3A, a plurality of holes 162 may be formed in the secondary surface 156 of the adapter 150 to receive one or more connectors 160. The holes 162 may be equidistantly spaced, as shown, or alternatively, may be randomly positioned. Similarly, a plurality of channels 164 may be formed in the primary surface 154 of the adapter 150. The connectors 160 are receivable within the channels 164 such that the connectors 160 do not interfere with the surface contact between the primary surface 154 of the adapter 150 and the build plate holder 103. However, it should be understood that connectors 160 that affix, not only to themselves, but alternatively, to the secondary surface 156 of the adapter 150, or a portion of the build plate holder 103 are also within the scope of the disclosure.

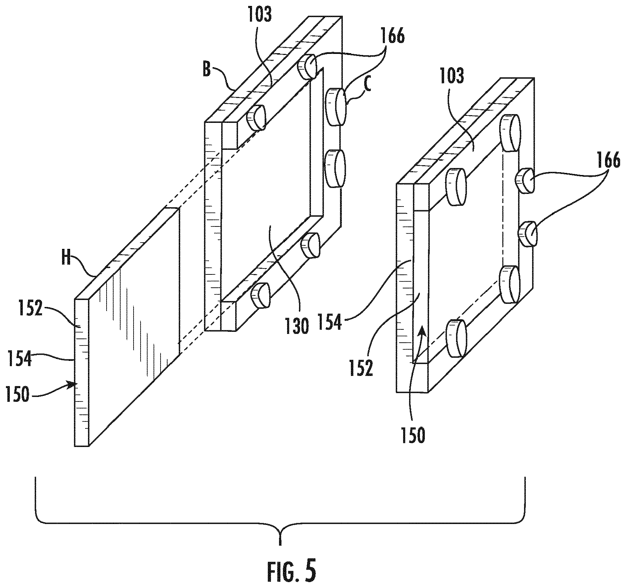

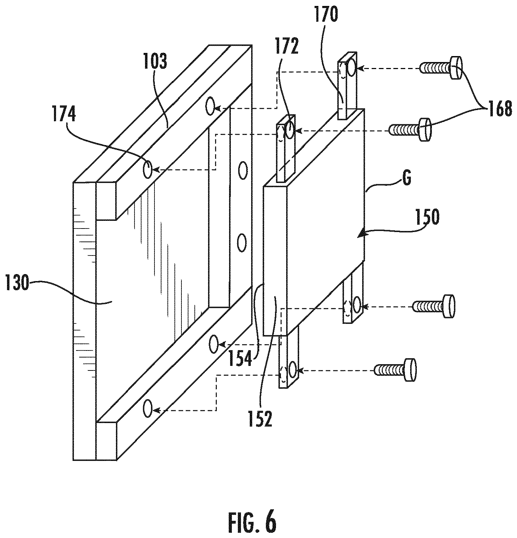

With specific reference now to FIGS. 5 and 6, the adapter 150 may be removably coupled to the build plate holder 103 in any suitable manner. For example, as shown in FIG. 5, the build plate holder 103 may have a plurality of spring clips 166 affixed thereto. Once the adapter 150 is installed within the corresponding opening of the build plate holder 103, the spring clips 166 can be operated, such as via rotation thereof for example, to apply a force to an adjacent portion of the adapter 150, such as to the secondary surface 156. Accordingly, the spring clips 166 will act on the adapter 150 to restrict movement of the adapter 150 relative to the build plate holder 103 as the build plate holder 103 is manipulated via one or more actuators 105 of the powder removal system 100. In another embodiment, the adapter 150 may be affixed to the build plate holder 103 via one or more fasteners 168. In the illustrated, non-limiting embodiment of FIG. 6, one or more arms 170 may extend outwardly from the adapter 150 such that when the adapter 150 is positioned within the opening of the build plate holder 103, the arms 170 overlap a corresponding portion of the build plate holder 103. One or more holes 172 formed in the arms 170 will align with a hole 174 formed in the build plate holder 103. It should be understood that the arms 170 are located about the adapter 150 to ensure that the primary surface 154 of the adapter 150 directly contacts the adjacent surface 130 of the build plate holder 103. In the illustrated, non-limiting embodiment, the arms 170 are skewed toward the secondary surface 156.

Via the adapter 150, a component 20 not previously compatible for use with a system 100 for removing unwanted material, may be used therewith. As a result, powder removal of complex additively manufactured plastic parts and/or smaller metal parts may be performed by the system 100.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. An adapter for connecting a component to a build plate holder (103) of a system for removing powder from the component, comprising:
a body (152) having a primary surface (154) for contacting the build plate holder and a secondary surface (156) for contacting a mounting surface of the component; and
at least one connector (160) for coupling the component to the body.

2. The adapter of claim 1, wherein at least one of a size and shape of the body is complementary to an opening of the build plate holder, the body being receivable within the opening of the build plate holder.

3. The adapter of claim 1 or 2, wherein the secondary surface of the body is generally planar.

4. The adapter of claim 1, 2 or 3, wherein the secondary surface is suitable for contacting a mounting surface of at least a first component and a second component, wherein a geometry of the first component is different than a geometry of the second component.

5. The adapter of any preceding claim, wherein the secondary surface includes a recess (158), a geometry of the recess being substantially identical to the mounting surface of the component.

6. The adapter of any preceding claim, wherein the body further comprises a plurality of holes (162) formed in the secondary surface for receiving the at least one connector.

7. The adapter of any preceding claim, wherein the body further comprises a plurality of channels (164) formed in the primary surface, a portion of the at least one connector being receivable within plurality of channels.

8. The adapter of any preceding claim, wherein the body is formed via an additively manufactured process.

9. The adapter of any preceding claim, wherein the body is formed from a plastic material.

10. The adapter of any preceding claim, wherein the at least one connector includes a zip tie.

11. The adapter of any preceding claim, wherein the component mounted to the secondary surface of the adapter does not include a build plate.

12. A system for removing powder from an additively manufactured component, comprising:
a powder removal mechanism (101) including:
a build plate holder (103) having a build plate opening;
at least one actuator (105) operable to move the build plate holder relative to an axis;
an adapter (150), as claimed in any preceding claim, the adapter being positionable within the build plate opening such that the primary surface is in contact with the surface of the build plate holder defining the build plate opening and the secondary surface is in contact with the mounting surface of the component.

13. The system of claim 12, wherein the adapter is suitable for use with a plurality of different additively manufactured components.

14. The system of claim 12 or 13, wherein the adapter is mounted within the build plate opening via a plurality of fasteners, and preferably wherein the fasteners includes spring clips (166) extending from the build plate holder and movable to contact the secondary surface of the adapter.

15. The system of claim 14, wherein the adapter further includes a plurality of arms (170), the plurality of arms being positionable in overlapping arrangement with a portion of the build plate holder, and preferably wherein the plurality of fasteners extend through both the plurality of arms and the portion of the build plate holder in overlapping arrangement with the plurality of arms.
